# EUROPEAN PATENT APPLICATION

(11) **EP 1 986 348 A1**
(43) Date of publication of application: **29.10.2008**
(21) Application number: 07714100.0
(22) Date of filing: 13.02.2007
(51) Int. Cl.: H04B 7/26, H04Q 7/22

(54) **RADIO ACCESS NETWORK DEVICE AND PERIPHERAL CELL INFORMATION REPORT METHOD**

(30) Priority: 15.02.2006 JP 2006038509
(71) Applicant: NTT DoCoMo, Inc., Chiyoda-ku Tokyo 100-6150 (JP)
(72) Inventor: ISHII, Minami, Tokyo 100-6150 (JP); ABETA, Sadayuki, Tokyo 100-6150 (JP); NAKAMURA, Takehiro, Tokyo 100-6150 (JP)
(74) Representative: HOFFMANN EITLE
(86) International application number: PCT/JP2007/052518
(87) International publication number: WO 2007/094320

(57) **Abstract**

A radio access network device used in a mobile communication system is disclosed. The radio access network device includes a first cell identifier selection unit configured to select an identifier used as a first cell identifier; a second cell identifier selection unit configured to select identifiers used as second cell identifiers; and a neighboring cell information generating unit configured to generate neighboring cell information including the first cell identifier and the second cell identifiers.

## Description

### TECHNICAL FIELD

The present invention generally relates to wireless communication technologies. More particularly, the present invention relates to a mobile station, a radio access network device, and a neighboring cell information reporting method.

### BACKGROUND ART

In a mobile communication system like the IMT-2000 communication system, each mobile station monitors cells. For this purpose, neighboring cell information is broadcast or sent individually to mobile stations (see, for example, non-patent document 1). The neighboring cell information includes scrambling codes (9 bits) of primary common pilot channels (CPICH) used in respective cells and a timing offset between cells.
[Non-patent document 1] 3GPP TS25.331 8.6.7
[Non-patent document 2] 3GPP TS25.814 7.1.1.5

### DISCLOSURE OF INVENTION

### PROBLEMS TO BE SOLVED BY THE INVENTION

There is a case where it is preferable to use different handover procedures for handover between cells belonging to the same base station and handover between cells belonging to different base stations. However, with the above method, the mobile station cannot determine whether the cells belong to the same base station or different base stations.

For example, to achieve fast cell selection (FCS), it is preferable to change the handover procedure based on whether the cells belong to the same base station. Handover between cells is normally controlled using the radio resource control (RRC) protocol. Compared with lower layer protocols, the speed of the RRC protocol is slow. Therefore, with the RRC protocol, it is difficult to perform high-speed control, for example, switching cells in 0.5 ms as described in non-patent document 2. When handover is performed between cells belonging to the same base station, it may be possible to process the handover at high speed using a lower layer protocol because communications between base stations are not necessary. However, in conventional methods, the mobile station does not distinguish base stations in the handover process. Therefore, it is difficult to perform fast cell selection with conventional methods.

One object of the present invention is to provide a radio access network device and a neighboring cell information reporting method that make it possible to change the operation of a mobile station based on whether handover is within the same base station.

### MEANS FOR SOLVING THE PROBLEMS

An embodiment of the present invention provides a radio access network device used in a mobile communication system including a mobile station and the radio access network device. The radio access network device includes a first cell identifier selection unit configured to select an identifier used as a first cell identifier; a second cell identifier selection unit configured to select identifiers used as second cell identifiers; and a neighboring cell information generating unit configured to generate neighboring cell information including the first cell identifier and the second cell identifiers.

This configuration enables the mobile station receiving the neighboring cell information to determine the hierarchical structure of cells, makes it possible to change the operation of the mobile station based on whether handover is performed between cells belonging to the same base station, and thereby makes it possible to process handover within the same base station at high speed by a layer lower than RRC.

Another embodiment of the present invention provides a method of reporting neighboring cell information used in a mobile communication system including a mobile station and a radio access network device. The method includes a first cell identifier selection step of selecting an identifier used as a first cell identifier; a second cell identifier selection step of selecting identifiers used as second cell identifiers; and a neighboring cell information generating step of generating the neighboring cell information including the first cell identifier and the second cell identifiers.

This method enables the mobile station receiving the neighboring cell information to determine the hierarchical structure of cells.

Embodiments of the present invention enable a mobile station receiving neighboring information to recognize the hierarchical structure of cells based on a first cell identifier and second cell identifiers, and to change its operation if the first cell identifier is different from that of the current base station.

### BRIEF DESCRIPTION OF THE DRAWINGS

FIG. 1 is a block diagram illustrating a mobile communication system according to an embodiment of the present invention;
FIG. 2 is a block diagram illustrating a radio access network device according to an embodiment of the present invention;
FIG. 3 is a drawing illustrating a hierarchical structure of first cell identifiers and second cell identifiers according to an embodiment of the present invention;
FIG. 4 is a drawing illustrating a structure of a second cell identifier according to an embodiment of the present invention; and
FIG. 5 is a block diagram illustrating a radio access network device according to an embodiment of the present invention.

### EXPLANATION OF REFERENCES

- 100: Mobile station
- 200: Radio access network device
- 210: Data transmission/reception unit
- 220: Neighboring cell information generating unit
- 230, 240: Cell identifier selection unit

### BEST MODE FOR CARRYING OUT THE INVENTION

The best mode for carrying out the invention is described based on the following embodiments with reference to the accompanying drawings. Throughout the accompanying drawings, the same reference numbers are used for parts having the same functions, and overlapping descriptions of those parts are omitted.

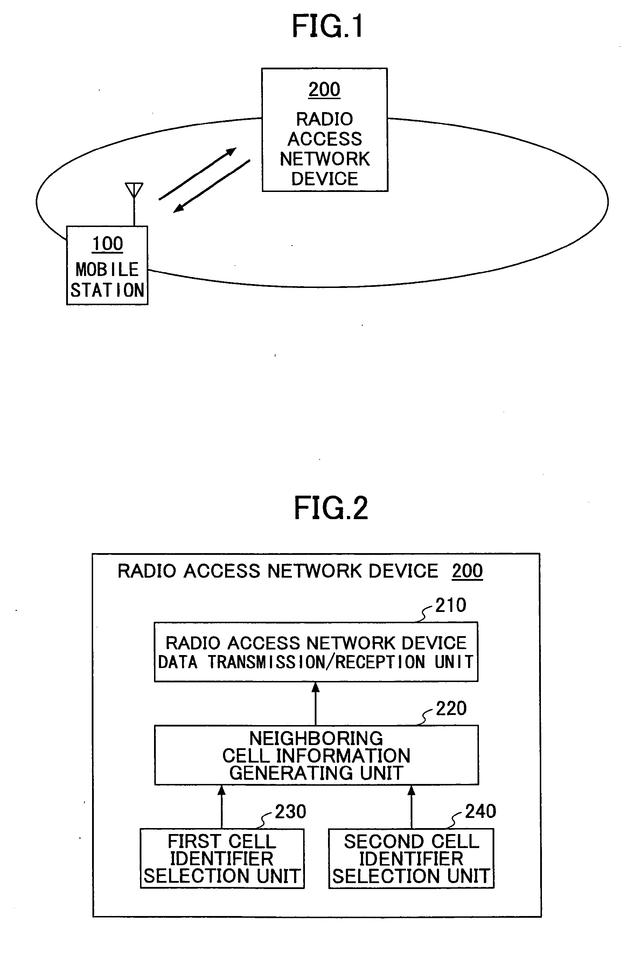

A mobile communication system according to an embodiment of the present invention is described below with reference to FIG. 1.

The mobile communication system of this embodiment includes a mobile station 100 and a radio access network device 200.

The mobile station 100 and the radio access network device 200 can wirelessly communicate with each other at least via a shared data channel.

In this embodiment, the radio access network device 200 includes functions of a radio base station and performs wireless communications directly with the mobile station 100. Alternatively, the radio access network device 200 may be configured not to include functions of a radio base station. In this case, the mobile communication system may include multiple radio base stations controlled by the radio access network device 200, and the radio access network device 200 may be configured to communicate with the mobile station 100 via the radio base stations.

Next, the radio access network device 200 of this embodiment is described with reference to FIG. 2.

The radio access network device 200 includes a data transmission/reception unit 210 used as a transmitting and receiving unit, a neighboring cell information generating unit 220 connected to the data transmission/reception unit 210, and a first cell identifier selection unit 230 and a second cell identifier selection unit 240 that are connected to the neighboring cell information generating unit 220. When the radio access network device 200 is composed of radio base stations and a radio control device, all or a part of its functions may be distributed among the radio base stations.

The data transmission/reception unit 210 receives uplink signals from the mobile station 100 and other uplink signals. Also, the data transmission/reception unit 210 transmits neighboring cell information and other downlink signals to the mobile station 100 and other mobile stations.

Each of the first cell identifier selection unit 230 and the second cell identifier selection unit 240 selects cell identifiers.

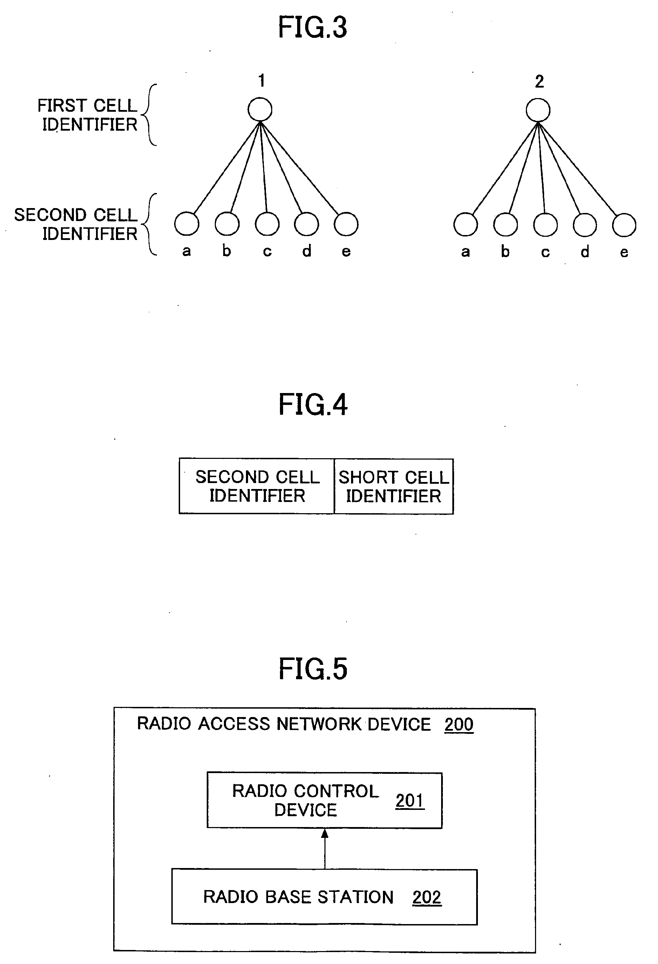

Cells may be hierarchically structured as shown in FIG. 3. In this case, parent nodes may be identified by first cell identifiers and child (branch) nodes may be identified by second cell identifiers. For example, when the parent nodes represent radio access network devices, the first cell identifier selection unit 230 of a given radio access network device selects an identifier unique to the radio access network device as the first cell identifier (i.e., cells belonging to a radio access network 1 are identified by a through e, and cells belonging to a radio access network 2 are identified by a through e). Alternatively, the first cell identifier selection unit 230 may be configured to select a scramble code unique to the radio access network device as the first cell identifier. Meanwhile, when the child (branch) nodes represent cells belonging to each radio access network device, the second cell identifier selection unit 240 selects identifiers unique to the cells as the second cell identifiers. Alternatively, the second cell identifier selection unit 240 may be configured to select scramble codes unique to the cells belonging to the radio access network device as the second cell identifiers.

As another example, when the parent nodes represent frequencies used by radio access network devices, the first cell identifier selection unit 230 of a given radio access network device selects an identifier unique to a frequency used by the radio access network device as the first cell identifier. In this case, the child (branch) nodes under each parent node may represent cells belonging to the same radio access network device and using the same frequency, and the second cell identifier selection unit 240 selects identifiers unique to the cells as the second cell identifiers.

A second cell identifier may be accompanied by a short cell identifier as shown in FIG. 4. For example, when it is necessary to include a cell identifier in an uplink signal to be transmitted by a mobile station, it is preferable to include a short cell identifier to reduce the length of the uplink signal.

The radio access network device 200 may be implemented by a radio control device 201 and a radio base station 202 as shown in FIG. 5. In the above embodiment, it is assumed that the radio access network device 200 includes functions of the radio control device 201 and the radio base station 202. Alternatively, the radio control device 201 and the radio base station 202 may be provided separately. Still, however, it is preferable to include the functions of the radio control device 201 and the radio base station 202 in one device in order to reduce delay time in data transmission.

Thus, the above embodiment enables a mobile station to recognize the hierarchical structure of cells and thereby makes it possible to appropriately change the handover operation of the mobile station based on the first cell identifier.

The present international application claims priority from Japanese Patent Application No. 2006-38509 filed on February 15, 2006, the entire contents of which are hereby incorporated herein by reference.

## Claims

1. A radio access network device used in a mobile communication system, comprising:
a first cell identifier selection unit configured to select an identifier used as a first cell identifier;
a second cell identifier selection unit configured to select identifiers used as second cell identifiers; and
a neighboring cell information generating unit configured to generate neighboring cell information including the first cell identifier and the second cell identifiers.

2. The radio access network device as claimed in claim 1, wherein
the first cell identifier selection unit is configured to select an identifier unique to the radio access network device as the first cell identifier; and
the second cell identifier selection unit is configured to select identifiers unique to cells belonging to the same radio access network device as the second cell identifiers.

3. The radio access network device as claimed in claim 1, wherein
the first cell identifier selection unit is configured to select an identifier unique to a frequency used by the radio access network device as the first cell identifier; and
the second cell identifier selection unit is configured to select identifiers unique to cells belonging to the same radio access network device and using the same frequency as the second cell identifiers.

4. The radio access network device as claimed in claim 2, wherein
the identifier unique to the radio access network device is a scramble code unique to the radio access network device; and
the identifiers unique to the cells belonging to the same radio access network device are scramble codes unique to the cells.

5. The radio access network device as claimed in any one of claims 1 through 4, wherein the second cell identifier selection unit is configured to select short cell identifiers accompanying the second cell identifiers.

6. A method of reporting neighboring cell information used in a mobile communication system including a mobile station and a radio access network device, the method comprising:
a first cell identifier selection step of selecting an identifier used as a first cell identifier;
a second cell identifier selection step of selecting identifiers used as second cell identifiers; and
a neighboring cell information generating step of generating the neighboring cell information including the first cell identifier and the second cell identifiers.

7. The method as claimed in claim 6, wherein in the first cell identifier selection step, an identifier unique to the radio access network device is selected as the first cell identifier; and
in the second cell identifier selection step, identifiers unique to cells belonging to the same radio access network device are selected as the second cell identifiers.

8. The method as claimed in claim 6, wherein in the first cell identifier selection step, an identifier unique to a frequency used by the radio access network device is selected as the first cell identifier; and
in the second cell identifier selection step, identifiers unique to cells belonging to the same radio access network device and using the same frequency are selected as the second cell identifiers.

9. The method as claimed in claim 7, wherein the identifier unique to the radio access network device is a scramble code unique to the radio access network device; and
the identifiers unique to the cells belonging to the same radio access network device are scramble codes unique to the cells.

10. The method as claimed in any one of claims 6 through 9, wherein in the second cell identifier selection step, short cell identifiers accompanying the second cell identifiers are selected.
